# EUROPEAN PATENT APPLICATION

(11) **EP 4 366 267 A1**
(43) Date of publication of application: **08.05.2024**
(21) Application number: 23746068.8
(22) Date of filing: 16.01.2023
(51) Int. Cl.: H04L 45/74

(54) **DATA TRANSMISSION METHOD, SYSTEM AND APPARATUS**

(30) Priority: 29.01.2022 CN 202210113213
(71) Applicant: Huawei Technologies Co., Ltd., Longgang Shenzhen, Guangdong 518129 (CN)
(72) Inventor: LIU, Wei, Shenzhen, Guangdong 518129 (CN); YU, Bin, Shenzhen, Guangdong 518129 (CN)
(74) Representative: MERH-IP Matias Erny Reichl Hoffmann Patentanwälte PartG mbB
(86) International application number: PCT/CN2023/072364
(87) International publication number: WO 2023/143186

(57) **Abstract**

This application discloses a data transmission method. Specifically, a second network device connected to a terminal device sends a first packet to a first network device, where the first packet includes a MAC address of the terminal device and a first management VLAN identifier, the first management VLAN identifier indicates a management VLAN configured for a first port on the second network device, and the first port is configured to connect the second network device and the terminal device. After receiving the first packet, the first network device establishes a first association relationship between the MAC address, the first management VLAN identifier, and a first logical port based on information in the first packet, where the first logical port is located on the first network device and corresponds to the first port. It can be learned that, in this application, the VLAN and the MAC address of the terminal device are encapsulated in the packet, so that the first network device locally establishes the first association relationship, to implement packet forwarding based on the first association relationship, and the second network device does not need to establish forwarding information, to reduce complexity of the second network device.

## Description

This application claims priority to Chinese Patent Application No. 202210113213.X, filed on January 29, 2022 and entitled "DATA TRANSMISSION METHOD, SYSTEM, AND APPARATUS", which is incorporated herein by reference in its entirety.

### TECHNICAL FIELD

This application relates to the field of communication technologies, and in particular, to a data transmission method, system, and apparatus.

### BACKGROUND

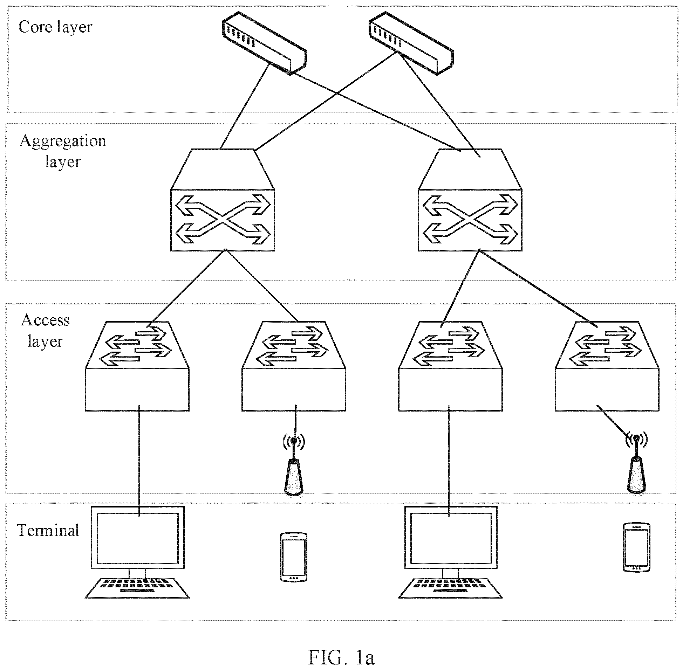

A campus network is mainly a school VPN of a university and an intranet of an enterprise, and mainly includes a computer, a router, and a machine. Currently, the campus network is deployed based on a conventional three-layer networking model, that is, a core layer, an aggregation layer, and an access layer, as shown in FIG. 1a. However, the conventional three-layer networking model is complex to deploy, difficult to operate and maintain, and has high costs.

### SUMMARY

This application provides a data transmission method, system, and apparatus, to simplify network deployment, facilitate operation and maintenance, and reduce costs.

According to a first aspect of this application, a data transmission method is provided. The method includes: A first network device receives a first packet sent by a second network device. The first packet includes a MAC address of a terminal device connected to the second network device and a first management VLAN identifier. The first management VLAN identifier indicates a management VLAN configured for a first port on the second network device, and the terminal device is connected to the second network device through the first port. After receiving the first packet, the first network device establishes a first association relationship between the MAC address, the first management VLAN identifier, and the first logical port based on the first packet. The first logical port is located on the first network device and corresponds to the first port. To be specific, in this application, the VLAN and the MAC address of the terminal device are encapsulated in the packet, so that the first network device locally establishes the first association relationship, to implement packet forwarding based on the first association relationship, and the second network device does not need to establish a forwarding table, to reduce complexity of the second network device and improve maintenance efficiency.

In a specific implementation, before that a first network device receives a first packet sent by a second network device, the method further includes: The first network device configures the first management VLAN identifier for the first logical port. The first network device establishes a second association relationship between the first management VLAN identifier and the first logical port. In this implementation, the first network device may configure the first management VLAN identifier for the first logical port, and further establish the association relationship between the first management VLAN identifier and the first logical port in advance, to provide a foundation for constructing the first association relationship.

In a specific implementation, the method further includes: The first network device sends the first management VLAN identifier to the second network device, to configure a management VLAN identifier corresponding to the first port as the first management VLAN identifier. In this implementation, after configuring the first management VLAN identifier for the first logical port, the first network device sends the first management VLAN identifier to the second network device, to enable the second network device to configure the first management VLAN identifier for the first port corresponding to the first logical port. In this way, the first logical port and the first port correspond to a same management VLAN.

In a specific implementation, the method further includes: The first network device obtains a second packet. A destination MAC address of the second packet is the MAC address of the terminal device. The first network device determines the first management VLAN identifier based on the destination MAC address and the first association relationship. The first network device encapsulates the second packet by using the first management VLAN identifier, to obtain a third packet; and sends the third packet to the second network device. In this implementation, after the first association relationship is established, when there is the delivered second packet, the first network device determines the first management VLAN identifier based on the destination MAC in the second packet and the first association relationship, and encapsulates the first management VLAN identifier in an outer layer of the second packet, to obtain the third packet; and sends the third packet to the second network device, to enable the second network device to determine an egress port based on the first management VLAN identifier, and send the third packet to the corresponding terminal device through the egress port.

In a specific implementation, that the first network device determines the first management VLAN identifier based on the destination MAC address and the first association relationship includes: The first network device determines the first logical port based on the destination MAC address and the first association relationship. The first network device determines the first management VLAN identifier based on the first logical port and the first association relationship.

In a specific implementation, the method further includes: The first network device receives a fourth packet sent by the second network device. The fourth packet is used by the second network device to register with the first network device. The fourth packet includes information about each port on the second network device, and the port is configured to connect to the terminal device. The first network device locally maps one logical port to each port. In this implementation, after the second network device is powered on, the second network device sends the fourth packet to the first network device, to register with the first network device. During registration, the second network device reports the information about each port corresponding to the second network device, to enable the first network device to locally map one logical port to each port. Therefore, the first network device may manage and configure each port on the second network device, to enable the second network device to be flexibly deployed, and plug-and-play to be supported.

In a specific implementation, the method further includes: The first network device receives a fifth packet sent by the second network device. The fifth packet is a broadcast packet, and the fifth packet includes the first management VLAN identifier. The first network device removes the first management VLAN identifier from the fifth packet, to obtain a sixth packet. The first network device obtains, based on the first association relationship, a management VLAN identifier other than the first management VLAN identifier. The first network device copies the sixth packet, and encapsulates, in each sixth packet, a management VLAN identifier other than the first management VLAN identifier, to obtain a seventh packet. The first network device sends the seventh packet to the second network device. In this implementation, when the terminal device sends the broadcast packet, the broadcast packet is sent to the first network device. When determining that the received fifth packet is the broadcast packet, the first network device respectively copies the broadcast packet for other logical ports, encapsulates the management VLAN identifier corresponding to the logical port, and then sends an encapsulated packet to the second network device, to enable the second network device to determine the egress port by using the management VLAN identifier in the packet, and forward the packet through the egress port.

According to a second aspect of this application, a data transmission method is provided. The method includes: A second network device obtains a MAC address of a terminal device connected to a first port. The second network device obtains a first packet. The first packet includes the MAC address and a first management VLAN identifier. The first management VLAN identifier indicates a management VLAN configured for the first port. The second network device sends the first packet to a first network device.

In a specific implementation, before that the second network device obtains a first packet, the method further includes: The second network device receives the first management VLAN identifier sent by the first network device. The second network device configures a management VLAN corresponding to the first port as the management VLAN indicated by the first management VLAN identifier.

In a specific implementation, the method further includes: The second network device receives a second packet sent by the first network device. The second packet includes the first management VLAN identifier. A destination MAC address of the second packet is the MAC address. The second network device determines, based on the first management VLAN identifier, that a forwarding port corresponding to the second packet is the first port. The second network device removes the first management VLAN identifier from the second packet, to obtain a third packet. The second network device sends the third packet to the terminal device through the first port.

In a specific implementation, after the second network device is powered on, the method further includes: The second network device sends a fourth packet to the first network device. The fourth packet is used to register with the first network device. The fourth packet includes information about each port on the second network device, and the port is configured to connect to the terminal device.

According to a third aspect of this application, a data transmission system is provided. The system includes a first network device and a second network device. The first network device communicates with the second network device. The first network device is configured to perform the data transmission method according to the first aspect or any implementation of the first aspect. The second network device is configured to perform the data transmission method according to the second aspect or any implementation of the second aspect.

In a specific implementation, the system further includes a controller. The controller communicates with the second network device. The controller is configured to manage the first network device and the second network device.

According to a fourth aspect of this application, a data transmission apparatus is provided. The apparatus includes: a receiving unit, configured to receive a first packet sent by a second network device, where the first packet includes a media access control address MAC address of a terminal device connected to the second network device and a first management virtual local area network VLAN identifier, the first management VLAN identifier indicates a management VLAN configured for a first port on the second network device, and the terminal device is connected to the second network device through the first port; and an establishment unit, configured to establish a first association relationship based on the first packet, where the first association relationship includes the MAC address, the first management VLAN identifier, and a first logical port, where the first logical port is located on a first network device and corresponds to the first port.

In a specific implementation, the apparatus further includes a configuration unit, configured to configure the first management VLAN identifier for the first logical port before the first packet sent by the second network device is received. The establishment unit is further configured to establish a second association relationship between the first management VLAN identifier and the first logical port.

In a specific implementation, the apparatus further includes a sending unit, configured to send the first management VLAN identifier to the second network device, to configure a management VLAN identifier corresponding to the first port as the first management VLAN identifier.

In a specific implementation, the apparatus further includes: an obtaining unit, configured to obtain a second packet, where a destination MAC address of the second packet is the MAC address of the terminal device; and a determining unit, configured to determine the first management VLAN identifier based on the destination MAC address and the first association relationship. The sending unit is configured to: encapsulate the second packet by using the first management VLAN identifier, to obtain a third packet; and send the third packet to the second network device.

In a specific implementation, the determining unit is specifically configured to: determine the first logical port based on the destination MAC address and the first association relationship, and determine the first management VLAN identifier based on the first logical port and the first association relationship.

In a specific implementation, the apparatus further includes a mapping unit. The receiving unit is further configured to receive a fourth packet sent by the second network device. The fourth packet is used by the second network device to register with the first network device. The fourth packet includes information about each port on the second network device, and the port is configured to connect to the terminal device. The mapping unit is configured to locally map one logical port to each port.

In a specific implementation, the apparatus further includes a decapsulating unit, the obtaining unit, a copying unit, an encapsulating unit, and the sending unit. The receiving unit is further configured to receive a fifth packet sent by the second network device. The fifth packet is a broadcast packet, and the fifth packet includes the first management VLAN identifier. The decapsulating unit is configured to remove the first management VLAN identifier from the fifth packet, to obtain a sixth packet. The obtaining unit is configured to obtain, based on the first association relationship, a management VLAN identifier other than the first management VLAN identifier. The copying unit is configured to copy the sixth packet. The encapsulating unit is configured to encapsulate, in each sixth packet, a management VLAN identifier other than the first management VLAN identifier, to obtain a seventh packet. The sending unit is configured to send the seventh packet to the second network device.

According to a fifth aspect of this application, a data transmission apparatus is provided. The apparatus includes: a first obtaining unit, configured to obtain a MAC address of a terminal device connected to a first port; a second obtaining unit, configured to obtain a first packet, where the first packet includes the MAC address and a first management VLAN identifier, and the first management VLAN identifier indicates a management VLAN configured for the first port; and a sending unit, configured to send the first packet to a first network device.

In a specific implementation, the apparatus further includes: a receiving unit, configured to receive the first management VLAN identifier sent by the first network device; and a configuration unit, configured to configure a management VLAN corresponding to the first port as the management VLAN indicated by the first management VLAN identifier.

In a specific implementation, the apparatus further includes the receiving unit, configured to receive a second packet sent by the first network device, where the second packet includes the first management VLAN identifier, and a destination MAC address of the second packet is the MAC address; a determining unit, configured to determine, based on the first management VLAN identifier, that a forwarding port corresponding to the second packet is the first port; and a decapsulating unit, configured to remove the first management VLAN identifier from the second packet, to obtain a third packet. The sending unit is further configured to send the third packet to the terminal device through the first port.

In a specific implementation, the sending unit is further configured to send a fourth packet to the first network device after the apparatus is powered on. The fourth packet is used to register with the first network device. The fourth packet includes information about each port on a second network device, and the port is configured to connect to the terminal device.

According to a sixth aspect of this application, a communication device is provided. The device includes a processor and a memory. The memory is configured to store instructions or a computer program. The processor is configured to execute the instructions or the computer program in the memory, to enable the communication device to perform the method according to the first aspect or any implementation of the first aspect, or to perform the method according to the second aspect or any implementation of the second aspect.

According to a seventh aspect of this application, a computer-readable storage medium is provided, including instructions. When the instructions are run on a computer, the computer is enabled to perform the method according to the first aspect or any implementation of the first aspect, or to perform the method according to the second aspect or any implementation of the second aspect.

According to technical solutions provided in this application, the second network device connected to the terminal device sends the first packet to the first network device. The first packet includes the media access control address (media access control Address, MAC address) of the terminal device and the first management virtual local area network (virtual local area network, VLAN) identifier. The first management VLAN identifier indicates the management VLAN configured for the first port on the second network device, and the first port is configured to connect the second network device and the terminal device. After receiving the first packet, the first network device establishes the first association relationship between the MAC address, the first management VLAN identifier, and the first logical port based on information in the first packet. The first logical port is located on the first network device and corresponds to the first port. It can be learned that, in this application, the VLAN and the MAC address of the terminal device are encapsulated in the packet, so that the first network device locally establishes the first association relationship, to implement packet forwarding based on the first association relationship, and the second network device does not need to establish a forwarding table, to reduce complexity of the second network device and facilitate maintenance.

### BRIEF DESCRIPTION OF DRAWINGS

To describe the technical solutions in embodiments of this application or in a conventional technology more clearly, the following briefly describes the accompanying drawings for describing embodiments or the conventional technology. It is clear that the accompanying drawings in the following descriptions show merely some embodiments recorded in this application. Persons of ordinary skill in the art may still derive other drawings from these accompanying drawings without creative efforts.
FIG. 1a is a conventional network deployment architecture;
FIG. 1b is a diagram of a network deployment architectural according to an embodiment of this application;
FIG. 2 is a flowchart of a data transmission method according to an embodiment of this application;
FIG. 3 is a schematic diagram of port management according to an embodiment of this application;
FIG. 4 is a schematic diagram of an application scenario according to an embodiment of this application;
FIG. 5 is a schematic diagram of another application scenario according to an embodiment of this application;
FIG. 6a is a schematic structural diagram of a packet according to an embodiment of this application;
FIG. 6b is a schematic diagram of a centralized management scenario according to an embodiment of this application;
FIG. 7 is a structural diagram of a data transmission apparatus according to an embodiment of this application;
FIG. 8 is a structural diagram of another data transmission apparatus according to an embodiment of this application;
FIG. 9 is a structural diagram of a communication device according to an embodiment of this application; and
FIG. 10 is a structural diagram of another communication device according to an embodiment of this application.

### DESCRIPTION OF EMBODIMENTS

To make persons skilled in the art better understand solutions in this application, the following clearly and completely describes the technical solutions in embodiments of this application with reference to the accompanying drawings in embodiments of this application. It is clear that the described embodiments are merely some embodiments rather than all of embodiments of this application.

For ease of understanding of the technical solutions provided in embodiments of this application, the following describes technical backgrounds in this application.

A campus network is usually deployed by using a three-layer network architecture. In this deployment architecture, a device at a core layer is generally deployed in an equipment room, a device at an aggregation layer is deployed in the equipment room or a building extra-low voltage room, and a device at an access layer is deployed in a floor extra-low voltage room. In actual application, a large quantity of network cables are deployed in the floor extra-low voltage room to connect to a terminal device. When a quantity of terminal devices that need to be connected increases, the device at the access layer needs to be expanded in the floor extra-low voltage room. However, the device at the access layer has high costs. As a result, a current processing manner not only increases expansion costs, but also causes management complexity.

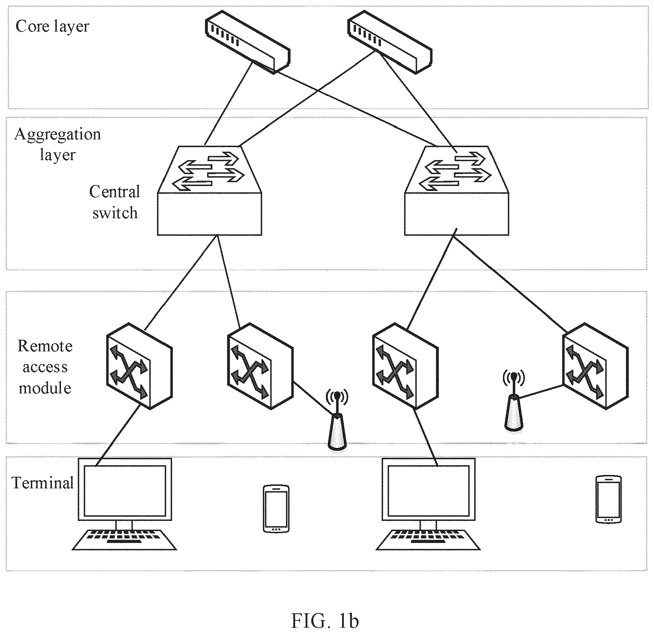

Based on this, a network deployment architecture is provided. The device at the aggregation layer is connected to a remote access module in a port extension manner, to connect to the terminal device by using the remote access module, and implement port extension. The device at the aggregation layer may manage and maintain the remote access module, and the remote access module provides a network access service for the terminal device in a configuration-free and operation and maintenance-free manner. When expansion is needed, only a quantity of remote access modules needs to be increased. Because the remote access module has a simple structure and function, production costs are low, and expansion costs are reduced. For example, as shown in FIG. 1b, a network structure includes a device at a core layer, a central switch, and a remote access module. The central switch is connected to the remote access module, and is configured to manage and configure the remote access module. The remote access module may be a switch having a simple structure.

In this application, a first network device may be the central switch in FIG. 1b, and a second network device is the remote access module. After the second network device is powered on, the second network device may automatically discover the first network device, and register with the first network device, so that the first network device manages and configures the second network device. The second network device sends a first packet to the first network device after the second network device completes registration with the first network device. The first packet includes a MAC address of a terminal device connected to the second network device and a first management VLAN identifier. The first management VLAN identifier indicates a management VLAN configured for a first port on the second network device. The first port is configured to connect the second network device and the terminal device. After receiving the first packet, the first network device establishes a first association relationship between the MAC address, the first management VLAN identifier, and a first logical port based on the first packet, for subsequent packet forwarding. A logical channel is established between the first logical port and the first port, to forward a packet through the logical channel. To be specific, in this application, the first network device establishes the first association relationship, and when the packet needs to be forwarded downstream, the first network device encapsulates the packet through the channel based on the first association relationship that is locally established. Therefore, after receiving the packet, the second network device may implement forwarding without looking up a table. This reduces maintenance complexity of the second network device. The first association relationship may be a layer 2 forwarding table (a MAC table), an address resolution protocol (address resolution protocol, ARP) table, or a layer 3 forwarding table, for example, an internet protocol (Internet Protocol, IP) table.

For ease of understanding of the technical solutions provided in embodiments of this application, the following provides descriptions with reference to the accompanying drawings.

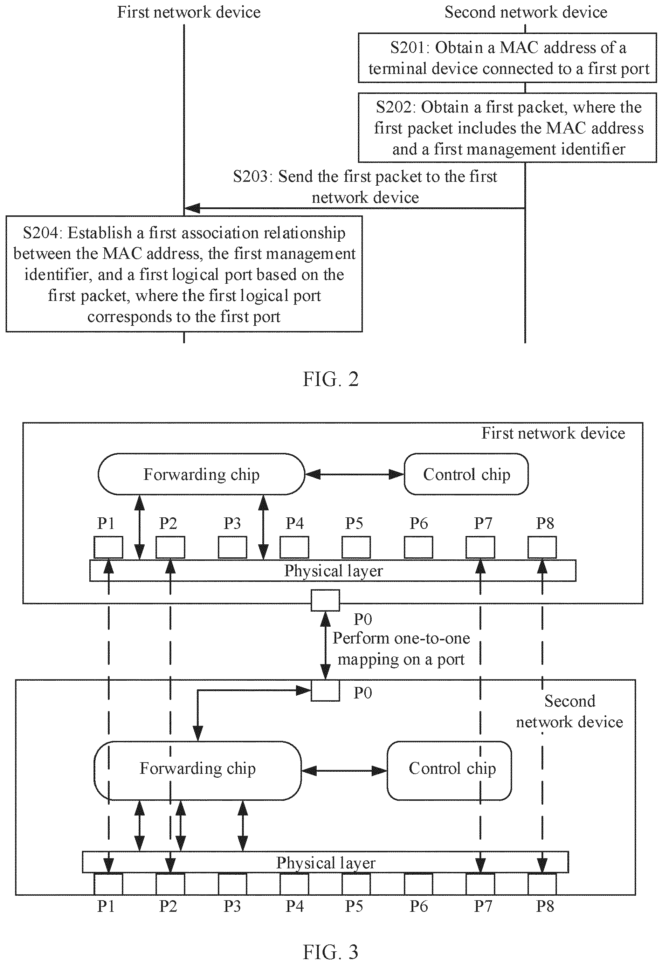

FIG. 2 is an interaction diagram of a data transmission method according to an embodiment of this application. As shown in FIG. 2, the method may include the following steps.

S201: A second network device obtains a MAC address of a terminal device connected to a first port.

In this embodiment, after going online, the terminal device may report, to the second network device through the first port, the MAC address corresponding to the terminal device. The terminal device communicates with the second network device through the first port.

S202: The second network device obtains a first packet, where the first packet includes the MAC address and a first management VLAN identifier.

In this embodiment, after obtaining the MAC address of the terminal device, the second network device obtains the first management VLAN identifier configured for the first port, and generates the first packet based on the MAC address and the first management VLAN identifier. Alternatively, after receiving a report packet sent by the terminal device, the second network device obtains the first management VLAN identifier configured by the first port, and adds the first management VLAN identifier to the report packet, to obtain the first packet. The report packet includes the MAC address.

The first management VLAN identifier configured for the first port is allocated by a first network device. Specifically, when the second network device registers with the first network device, the second network device sends a fourth packet to the first network device. The fourth packet is used to register with the first network device. The fourth packet includes information about each port on the second network device. To be specific, the second network device reports, to the first network device by using the fourth packet, the information about each port included in the second network device, and the port is configured to connect to the terminal device, that is, a downlink port. The information about each port that is reported by the second network device may include a port number and/or a port index.

After receiving the fourth packet, the first network device locally maps one logical port to each port, and then manages and configures a port on the first network device through the logical port that is locally mapped. For example, as shown in FIG. 3, the second network device includes eight ports: P1 to P8. The eight ports may be connected to different terminal devices. The first network device locally maps eight logical ports: P1 to P8. The eight logical ports correspond one-to-one with the eight ports on the second network device. Specifically, when the first network device corresponds to a plurality of second network devices, the first network device may establish a corresponding port mapping table for a port on each second network device, to configure and manage the port on each second network device by using the port mapping table. The logical port indicates a layer 2 forwarding logical channel established between the first network device and the second network device.

After the first network device maps one logical port to each port on the second network device, the first network device may allocate one management VLAN to each logical port, and send the management VLAN identifier corresponding to the logical port to the second network device, to configure the management VLAN on the corresponding port. Specifically, the first network device configures the first management VLAN identifier for the first logical port, and establishes an association relationship between the first management VLAN identifier and the first logical port. Further, the first network device sends the first management VLAN identifier to the second network device, to configure a management VLAN corresponding to the first port as a management VLAN indicated by the first management VLAN identifier. The first management VLAN identifier is used for communication between the first network device and the second network device, and the first logical port indicates the layer 2 forwarding logical channel established between the first network device and the second network device.

S203: The second network device sends the first packet to the first network device.

After obtaining the first packet, the second network device may send the first packet to the first network device through an uplink port. For example, in FIG. 3, the second network device sends the first packet to the first network device through a P0 port.

S204: The first network device establishes a first association relationship based on the first packet.

After the first network device receives the first packet sent by the second network device, the first network device parses the first packet to obtain the MAC address of the terminal device and the first management VLAN identifier, and establishes the first association relationship between the MAC address, the first management VLAN identifier, and the first logical port based on the association relationship between the first management VLAN identifier and the first logical port.

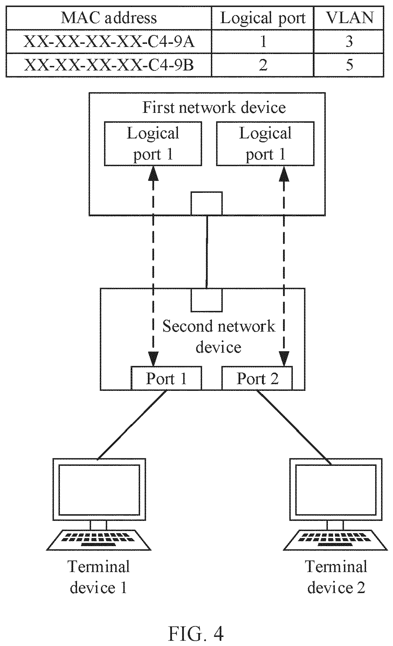

For example, as shown in FIG. 4, in this application scenario, the second network device is connected to a terminal device 1 through a port 1, and is connected to a terminal device 2 through a port 2. A logical port 1 on the first network device corresponds to the port 1, and is bound to a VLAN 3. A logical port 2 corresponds to the port 2, and is bound to a VLAN 5. A MAC address of the terminal device 1 is XX-XX-XX-XX-C4-9A, and a MAC address of the terminal device 2 is XX-XX-XX-XX-C4-9B. The second network device sends a packet 1 to the first network device. The packet 1 includes XX-XX-XX-XX-C4-9A and the VLAN 3. The second network device sends a packet 2 to the first network device. The packet 2 includes XX-XX-XX-XX-C4-9B and the VLAN 5. After receiving the packet 1 and the packet 2, the first network device establishes the first association relationship between the MAC address, the logical port, and the VLAN identifier.

It can be learned from the foregoing description that the second network device connected to the terminal device sends the first packet to the first network device. The first packet includes the media access control address (media access control Address, MAC address) of the terminal device and the first management virtual local area network (virtual local area network, VLAN) identifier. The first management VLAN identifier indicates the management VLAN configured for the first port on the second network device, and the first port is configured to connect the second network device and the terminal device. After receiving the first packet, the first network device establishes the first association relationship between the MAC address, the first management VLAN identifier, and the first logical port based on information in the first packet. The first logical port is located on the first network device and corresponds to the first port. It can be learned that, in this application, the VLAN and the MAC address of the terminal device are encapsulated in the packet, so that the first network device locally establishes the first association relationship, to implement packet forwarding based on the first association relationship, and the second network device does not need to establish forwarding information, to reduce complexity of the second network device and facilitate maintenance.

After the first network device establishes the first association relationship, when downlink traffic forwarding exists, the first network device may encapsulate, based on the established first association relationship, a to-be-forwarded packet, so that the packet can be forwarded to a destination terminal device. Specifically, the first network device obtains a second packet. A destination MAC address of the second packet is the MAC address of the terminal device. The first network device determines the first management VLAN identifier based on the destination MAC address and the first association relationship. The first network device encapsulates the second packet by using the first management VLAN identifier, to obtain a third packet; and sends the third packet to the second network device. That the first network device determines the first management VLAN identifier based on the destination MAC address and the first association relationship includes: The first network device determines the first logical port based on the destination MAC address and the first association relationship. The first network device determines the first management VLAN identifier based on the first logical port and the first association relationship. To be specific, after obtaining the second packet, the first network device parses the second packet to obtain the destination MAC address, first determines the first logical port based on the destination MAC address and the first association relationship, and then determines, based on the first logical port, the first management VLAN identifier corresponding to the first logical port. After the first management VLAN identifier is determined, the first management VLAN identifier is encapsulated in an outer layer of the second packet, to obtain the third packet, and the third packet is sent to the second network device.

After receiving the third packet, the second network device parses the third packet to obtain the first management VLAN identifier. The second network device determines, based on the first management VLAN identifier, that a forwarding port corresponding to the third packet is the first port. The second network device removes the first management VLAN identifier from the third packet, and sends, through the first port, the third packet from which the first management VLAN identifier is removed, to the terminal device corresponding to the destination MAC address. The terminal device connected to the first port is the terminal device corresponding to the destination MAC address. To be specific, after receiving a service packet delivered by the first network device, the second network device determines, based on a management VLAN identifier in the packet, an egress port corresponding to the packet, and decapsulates the management VLAN in the packet after determining the egress port, to send, through the determined egress port, a decapsulated packet to the terminal device corresponding to the destination MAC address.

For example, in FIG. 4, the first network device receives the packet 1 sent by an upper-layer network device. A destination MAC address of the packet 1 is XX-XX-XX-XX-C4-9B. The first network device determines, based on the destination MAC address of the packet and the first association relationship, that a corresponding logical port is 2, and further determines that a management VLAN identifier corresponding to the logical port 2 is 5. The first network device encapsulates the management VLAN identifier 5 in the packet 1, to obtain the packet 2; and sends the packet 2 to the second network device through a downlink egress port. After receiving the packet 2, the second network device parses the packet 2 to learn that the encapsulated management VLAN identifier is 5, and determines, by using the management VLAN identifier 5, that the corresponding egress port is the port 2. In this case, the second network device decapsulates the management VLAN identifier 5 in the packet 2, to obtain a packet 3; and sends the packet 3 to the terminal device 2 through an egress port 2.

In addition, in some application scenarios, the terminal device may alternatively send a broadcast packet, and the broadcast packet may also be sent to the first network device by using the second network device, so that the broadcast packet is broadcast by using the first network device. Specifically, after the second network device receives the broadcast packet sent by the terminal device, the second network device determines, based on the first port corresponding to the received broadcast packet, that the first port corresponds to the first management VLAN identifier, and encapsulates the first management VLAN identifier in the broadcast packet, to obtain a fifth packet. The second network device sends the fifth packet to the first network device through an uplink port. After receiving the fifth packet, the first network device parses the fifth packet to finds that a destination MAC address of the fifth packet does not exist or destination MAC address is all FFs, to determine that the fifth packet is the broadcast packet. The first network device removes the first management VLAN identifier from the fifth packet, to obtain a sixth packet. The first network device obtains a management VLAN identifier other than the first management VLAN identifier based on the first association relationship. The first network device copies the sixth packet, and encapsulates, in each sixth packet, a management VLAN identifier other than the first management VLAN identifier, to obtain a seventh packet. The first network device sends the seventh packet to the second network device. To be specific, when determining that the packet sent by the second network device is the broadcast packet, the first network device respectively copies one packet for other logical ports (where the logical port corresponds to the port on the second network device), and encapsulates, in the packet, the management VLAN identifier corresponding to the logical port, and then sends an encapsulated packet to the second network device, to enable the second network device to determine the egress port by using the management VLAN identifier, and further forward the packet through the egress port.

For example, in FIG. 4, the terminal device 1 sends a broadcast packet 1 to the first network device by using the second network device. The broadcast packet 1 includes a management VLAN identifier 3 encapsulated by the second network device. The first network device determines, by using the management VLAN identifier 3 in the broadcast packet 1, the corresponding logical port 1. In this case, the first network device decapsulates the management VLAN identifier 3 in the broadcast packet 1, to obtain a broadcast packet 2. Because there is another logical port (the logical port 2), the management VLAN identifier 5 corresponding to the logical port 2 is encapsulated in the broadcast packet 2, to obtain a broadcast packet 3. The broadcast packet 3 is sent to the second network device, and is forwarded to the terminal device 2 through the port 2 on the second network device. In addition, when there is further a logical port 3 (where the logical port 3 corresponds to the port 3 on the second network device) in the first association relationship, the first network device copies the broadcast packet 2, encapsulates, in the broadcast packet 2, the management VLAN identifier corresponding to the logical port 3, to obtain a broadcast packet 4; and sends the broadcast packet 4 to the second network device, to forward the broadcast packet 4 to the connected terminal device through the port 3 on the second network device.

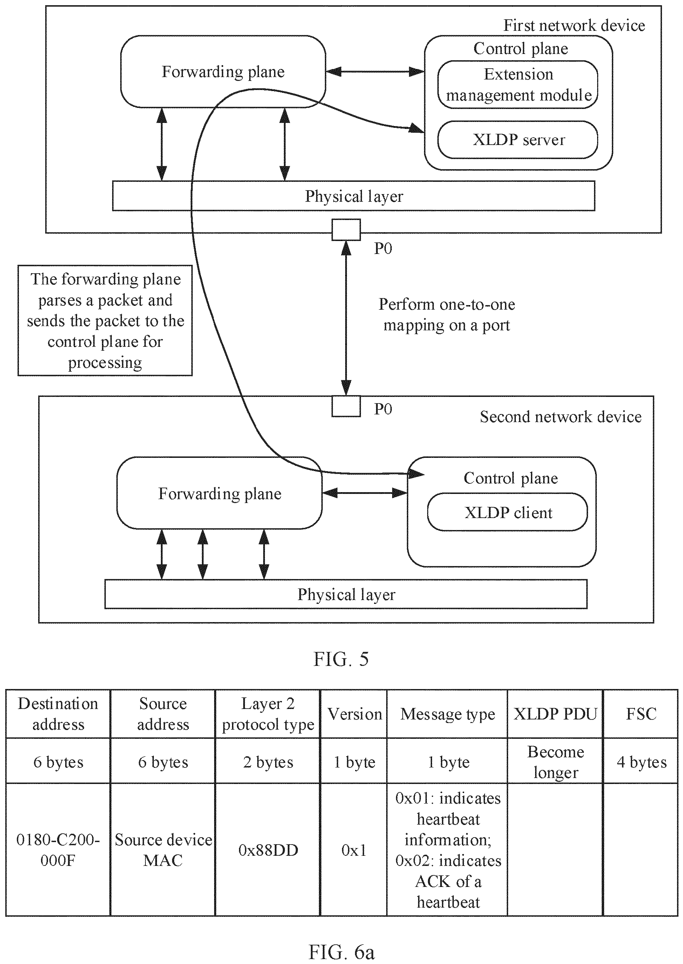

It should be noted that, in this embodiment, when the second network device registers with the first network device, or when the first network device manages or configures the second network device, an eXtremely lean discovery protocol (x-lean discovery protocol, XLDP) may be used for implementation. The first network device interacts with the second network device by using the XLDP protocol, to complete interaction of a control packet such as registration, configuration, and a firmware update. Specifically, an XLDP client may be deployed on the second network device, and is responsible for initiating registration with the first network device and establishing an XLDP channel. An XLDP server is deployed on the first network device, and is responsible for receiving a channel establishment request sent by the second network device, sending a configuration packet to the second network device, and the like. In addition, an extension management module may be further deployed on the first network device, to manage the port on the second network device by using the extension management module. For example, as shown in FIG. 5, the XLDP server and the extension management module are deployed on a control plane of the first network device, and the XLDP client is deployed on a control plane of the second network device.

An XLDP packet uses a packet format of layer 2 communication. As shown in FIG. 6a, the packet may include a destination MAC, a source MAC, a layer 2 protocol type, a version, a message type (message type), an XLDP protocol data unit (protocol data unit, PDU), a frame check sequence (frame check sequence, FSC), and the like. The destination MAC address may be fixed 0180-C200-000F, the source MAC address is a MAC address of a source device, and the layer 2 protocol type is 0x88DD. A packet type is distinguished by using the message type, and packet content is carried in an XLDP PDU field. The XLDP PDU field is in a type-length-value (type-length-value, TLV) format, and supports nesting to meet different packet encapsulation. A T field indicates the packet type, an L field indicates a packet length, and a V field is usually used to store the packet content.

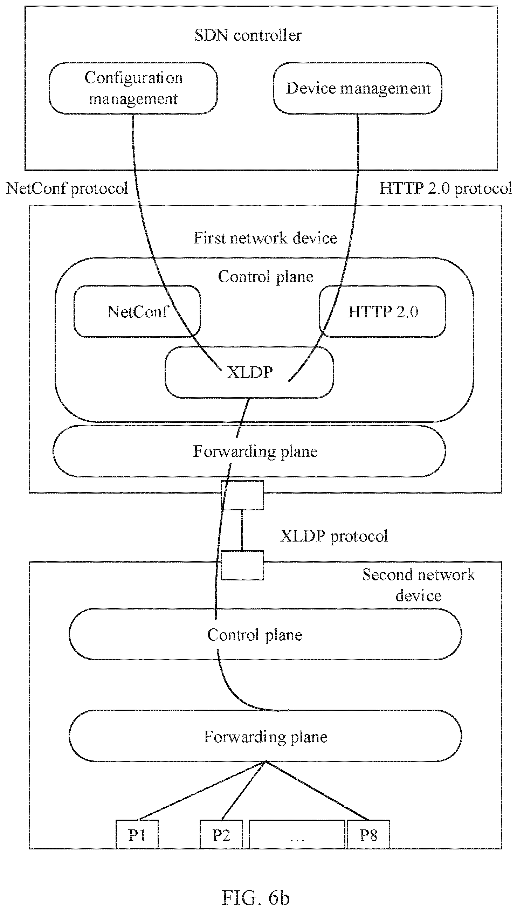

In addition, in this embodiment, the first network device and the second network device may be configured and managed in a centralized manner by using a software defined network (software defined network, SDN) architecture. Specifically, as shown in FIG. 6b, the first network device registers with an SDN controller, and establishes a network configuration protocol (network configuration protocol, NETCONF) channel and a hyper text transfer protocol (hyper text transfer protocol, HTTP) 2.0 channel. During service configuration, configuration is performed on the SDN controller, configuration data is delivered to the first network device through the NetConf channel, and the first network device delivers the configuration data to the second network device by using the XLDP protocol, to implement configuration on the second network device. In this embodiment, the first network device implements data reporting of the plurality of second network devices in a proxy manner. This reduces maintenance and overheads of a channel of the SDN controller. Specifically, after collecting operation and maintenance data such as a status of a local port, the second network device may send the operation and maintenance data to the first network device by using the XLDP protocol, and then the first network device sends the operation and maintenance data to the SDN controller through the HTTP 2.0 channel for presentation.

Based on the foregoing method embodiment, embodiments of this application provide a data transmission apparatus and a communication device. The following provides descriptions with reference to the accompanying drawings.

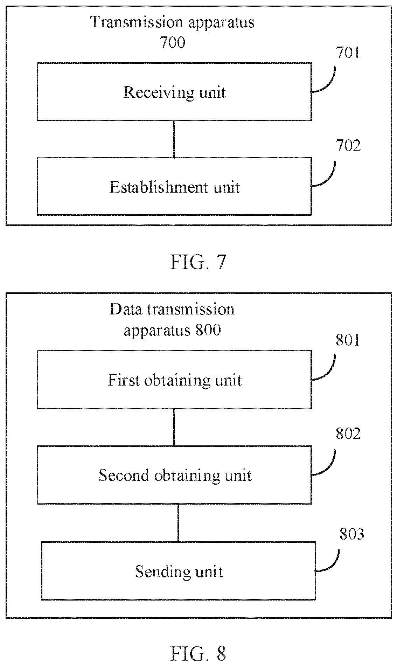

FIG. 7 is a schematic structural diagram of a data transmission apparatus according to an embodiment of this application. As shown in FIG. 7, the apparatus 700 can implement a function of the foregoing first network device, and the apparatus may include a receiving unit 701 and an establishment unit 702.

The receiving unit 701 is configured to receive a first packet sent by a second network device. The first packet includes a media access control address MAC address of a terminal device connected to the second network device and a first management virtual local area network VLAN identifier. The first management VLAN identifier indicates a management VLAN configured for a first port on the second network device. The terminal device is connected to the second network device through the first port.

The establishment unit 702 is configured to establish a first association relationship between the MAC address, the first management VLAN identifier, and a first logical port based on the first packet. The first logical port is located on the first network device and corresponds to the first port. For specific implementation of the establishment unit 702, refer to the related description in S204.

In a specific implementation, the apparatus further includes a configuration unit.

The configuration unit is configured to configure the first management VLAN identifier for the first logical port before the first packet sent by the second network device is received.

The establishment unit is further configured to establish a second association relationship between the first management VLAN identifier and the first logical port.

In a specific implementation, the apparatus further includes a sending unit.

The sending unit is configured to send the first management VLAN identifier to the second network device, to configure a management VLAN identifier corresponding to the first port as the first management VLAN identifier.

In a specific implementation, the apparatus further includes an obtaining unit, a determining unit, and the sending unit.

The obtaining unit is configured to obtain a second packet. A destination MAC address of the second packet is the MAC address of the terminal device.

The determining unit is configured to determine the first management VLAN identifier based on the destination MAC address and the first association relationship.

The sending unit is configured to: encapsulate the second packet by using the first management VLAN identifier, to obtain a third packet; and send the third packet to the second network device.

In a specific implementation, the determining unit is specifically configured to: determine the first logical port based on the destination MAC address and the first association relationship, and determine the first management VLAN identifier based on the first logical port and the first association relationship.

In a specific implementation, the apparatus further includes a mapping unit.

The receiving unit is further configured to receive a fourth packet sent by the second network device. The fourth packet is used by the second network device to register with the first network device. The fourth packet includes information about each port on the second network device, and the port is configured to connect to the terminal device.

The mapping unit is configured to locally map one logical port to each port.

In a specific implementation, the apparatus further includes a decapsulating unit, the obtaining unit, a copying unit, an encapsulating unit, and the sending unit.

The receiving unit is further configured to receive a fifth packet sent by the second network device. The fifth packet is a broadcast packet, and the fifth packet includes the first management VLAN identifier.

The decapsulating unit is configured to remove the first management VLAN identifier from the fifth packet, to obtain a sixth packet.

The obtaining unit is configured to obtain, based on the first association relationship, a management VLAN identifier other than the first management VLAN identifier.

The copying unit is configured to copy the sixth packet.

The encapsulating unit is configured to encapsulate, in each sixth packet, a management VLAN identifier other than the first management VLAN identifier, to obtain a seventh packet.

The sending unit is configured to send the seventh packet to the second network device.

It should be noted that, for implementation of each unit in this embodiment, reference may be made to related descriptions of the embodiment shown in FIG. 2. Details are not described herein again in this embodiment.

FIG. 8 is a structural diagram of another data transmission apparatus according to an embodiment of this application. The apparatus 800 can implement a function of the foregoing second network device. The apparatus includes a first obtaining unit 801, a second obtaining unit 802, and a sending unit 803.

The first obtaining unit 801 is configured to obtain a MAC address of a terminal device connected to a first port.

The second obtaining unit 802 is configured to obtain a first packet. The first packet includes the MAC address and a first management VLAN identifier. The first management VLAN identifier indicates a management VLAN configured for the first port.

The sending unit 803 is configured to send the first packet to a first network device.

In a specific implementation, the apparatus further includes a receiving unit and a configuration unit.

The receiving unit is configured to receive the first management VLAN identifier sent by the first network device.

The configuration unit is configured to configure a management VLAN corresponding to the first port as the management VLAN indicated by the first management VLAN identifier.

In a specific implementation, the apparatus further includes the receiving unit, a determining unit, and a decapsulation unit.

The receiving unit is configured to receive a second packet sent by the first network device. The second packet includes the first management VLAN identifier A destination MAC address of the second packet is the MAC address.

The determining unit is configured to determine, based on the first management VLAN identifier, that a forwarding port corresponding to the second packet is the first port.

The decapsulating unit is configured to remove the first management VLAN identifier from the second packet to obtain a third packet.

The sending unit is configured to send the third packet to the terminal device through the first port.

In a specific implementation, the sending unit is further configured to send a fourth packet to the first network device after the apparatus is powered on. The fourth packet is used to register with the first network device. The fourth packet includes information about each port on the second network device, and the port is configured to connect to the terminal device.

It should be noted that, for implementation of each unit in this embodiment, reference may be made to related descriptions in the foregoing method embodiment. Details are not described herein again in this embodiment.

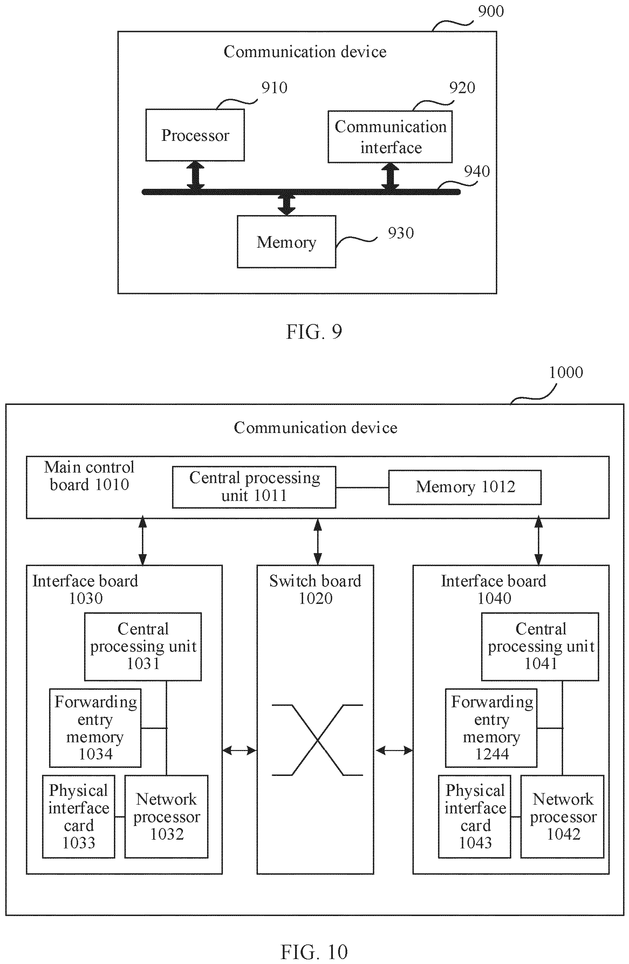

FIG. 9 is a schematic structural diagram of a communication device according to an embodiment of this application. The communication device may be, for example, the first network device or the second network device in the foregoing method embodiment, or may be device implementation of the apparatus 700 in the embodiment shown in FIG. 7, or may be device implementation of the apparatus 800 in the embodiment shown in FIG. 8.

The communication device 900 includes a processor 910, a communication interface 920, and a memory 930. There may be one or more processors 910 in the communication device 900. In FIG. 9, one processor is used as an example. In this embodiment of this application, the processor 910, the communication interface 920, and the memory 930 may be connected by using a bus system or in another manner. In FIG. 9, an example in which the processor 910, the communication interface 920, and the memory 930 are connected by using a bus system 940 is used.

The processor 910 may be a CPU, an NP, or a combination of the CPU and the NP. The processor 910 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The memory 930 may include a volatile memory (volatile memory), for example, a random-access memory (random-access memory, RAM). The memory 930 may alternatively include a non-volatile memory (non-volatile memory), for example, a flash memory (flash memory), a hard disk drive (hard disk drive, HDD), or a solid-state drive (solid-state drive, SSD). The memory 930 may further include a combination of the foregoing types of memories. The memory 930 may store, for example, the first association relationship, the second association relationship, and the like mentioned above.

Optionally, the memory 930 stores an operating system, a program, an executable module, or a data structure, or a subset thereof, or an extended set thereof. The program may include various operation instructions, and is used to implement various operations. The operating system may include various system programs and is used to implement various basic services and process a hardware-based task. The processor 910 may read a program in the memory 930, to implement the data transmission method provided in embodiments of this application.

The memory 930 may be a storage device in the communication device 900, or may be a storage apparatus independent of the communication device 900.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of indication, the bus is indicated by using only one bold line in FIG. 9. However, it does not indicate that there is only one bus or only one type of bus.

FIG. 10 is a schematic structural diagram of a communication device 1000 according to an embodiment of this application. The communication device may be, for example, the first network device or the second network device in the method embodiment, or may be device implementation of the apparatus 700 in the embodiment shown in FIG. 7, or may be device implementation of the apparatus 800 in the embodiment shown in FIG. 8.

The communication device 1000 includes a main control board 1010 and an interface board 1030.

The main control board 1010 is also referred to as a main processing unit (main processing unit, MPU) or a route processor card (route processor card). The main control board 1010 controls and manages each component in the communication device 1000, including functions of route calculation, device management, device maintenance, and protocol processing. The main control board 1010 includes a central processing unit 1011 and a memory 1012.

The interface board 1030 is also referred to as a line processing unit (line processing unit, LPU), a line card (line card), or a service board. The interface board 1030 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030 and communicate with the central processing unit 1011 on the main control board 1010.

The network processor 1032 is configured to implement packet forwarding processing. A form of the network processor 1032 may be a forwarding chip. Specifically, processing on an uplink packet includes: processing on a packet inbound interface, and forwarding table searching. Processing on a downlink packet includes forwarding table searching.

The physical interface card 1033 is configured to implement an interconnection function at a physical layer. Original traffic enters the interface board 1030 from the physical interface card 1033, and a processed packet is sent from the physical interface card 1033. The physical interface card 1033 includes at least one physical interface, and the physical interface is also referred to as a physical port. The physical interface card 1033, also referred to as a subcard, may be installed on the interface board 1030, and is responsible for converting an optical/electrical signal into a packet, performing validity check on the packet, and forwarding the packet to the network processor 1032 for processing. In some embodiments, the central processing unit 1031 of the interface board 1030 may also execute a function of the network processor 1032, for example, implement software forwarding based on a general-purpose CPU. Therefore, the network processor 1032 is not required in the physical interface card 1033.

Optionally, the communication device 1000 includes a plurality of interface boards. For example, the communication device 1000 further includes an interface board 1040. The interface board 1040 includes a central processing unit 1041, a network processor 1042, a forwarding entry memory 1044, and a physical interface card 1043.

Optionally, the communication device 1000 further includes a switch board 1020. The switch board 1020 may also be referred to as a switch fabric unit (switch fabric unit, SFU). When the communication device has a plurality of interface boards 1030, the switch board 1020 is configured to complete data exchange between the interface boards. For example, the interface board 1030 and the interface board 1040 may communicate with each other by using the switch board 1020.

The main control board 1010 and the interface board 1030 are coupled. For example, the main control board 1010, the interface board 1030, the interface board 1040, and the switch board 1020 are connected to a system backplane through a system bus to implement interworking. In a possible implementation, an inter-process communication protocol (inter-process communication, IPC) channel is established between the main control board 1010 and the interface board 1030, and communication is performed between the main control board 1010 and the interface board 1030 through the IPC channel.

Logically, the communication device 1000 includes a control plane and a forwarding plane. The control plane includes the main control board 1010 and the central processing unit 1031, and the forwarding plane includes components that perform forwarding, for example, the forwarding entry memory 1034, the physical interface card 1033, and the network processor 1032. The control plane performs functions such as routing, generating a forwarding table, processing signaling and a protocol packet, and configuring and maintaining a device state. The control plane delivers the generated forwarding table to the forwarding plane. On the forwarding plane, the network processor 1032 forwards, through table searching and based on the forwarding table delivered by the control plane, a packet received by the physical interface card 1033. The forwarding table delivered by the control plane may be stored in the forwarding entry memory 1034. In some embodiments, the control plane and the forwarding plane may be completely separated, and are not on a same device.

It should be understood that an operation on the interface board 1040 in this embodiment of this application is the same as an operation on the interface board 1030. For brevity, details are not described again. It should be understood that the communication device 1000 in this embodiment may correspond to the communication device in the foregoing method embodiments. The main control board 1010, the interface board 1030, and/or the interface board 1040 in the communication device 1000 may implement functions in the foregoing method embodiments. For brevity, details are not described herein again.

It should be understood that there may be one or more main control boards, and when there are a plurality of main control boards, a primary main control board and a standby main control board may be included. There may be one or more interface boards, and the communication device having a stronger data processing capability provides more interface boards. There may also be one or more physical interface cards on the interface board. There may be no switch board, or there may be one or more switch boards. When there are a plurality of switch boards, load sharing and redundancy backup may be implemented together. In a centralized forwarding architecture, the communication device may not need the switch board, and the interface board provides a function of processing service data of an entire system. In a distributed forwarding architecture, the communication device may have at least one switch board, and data exchange between a plurality of interface boards is implemented by using the switch board, to provide a large-capacity data exchange and processing capability. Therefore, a data access and processing capability of the communication device in the distributed architecture is greater than a data access and processing capability of the device in the centralized architecture. Optionally, the communication device may alternatively be in a form in which there is only one card. To be specific, there is no switch board, and functions of the interface board and the main control board are integrated on the card. In this way, the central processing unit on the interface board and the central processing unit on the main control board may be combined into one central processing unit on the card, to perform functions obtained after the two central processing units are combined. The device in this form (for example, a communication device such as a low-end switch or router) has a weak data exchange and processing capability. A specific architecture to be used depends on a networking deployment scenario.

In some possible embodiments, the communication device may be implemented as a virtualization device. For example, the virtualization device may be a virtual machine (virtual machine, VM) that runs a program having a function of sending a packet, and the virtual machine is deployed on a hardware device (for example, a physical server). The virtual machine is a complete computer system simulated by software, having complete hardware system functions, and running in a completely isolated environment. The virtual machine may be configured as the communication device. For example, the communication device may be implemented based on a general-purpose physical server in combination with a network functions virtualization (network functions virtualization, NFV) technology. The communication device is a virtual host, a virtual router, or a virtual switch. Persons skilled in the art may virtualize, on the general-purpose physical server by reading this application with reference to the NFV technology, the communication device that has the foregoing function. Details are not described herein.

It should be understood that the communication devices in the foregoing product types have any function of the communication device in the foregoing method embodiments, and details are not described herein again.

Embodiments of this application further provide a chip, including a processor and an interface circuit. The interface circuit is configured to receive instructions and transmit the instructions to the processor. The processor may be, for example, a specific implementation form of the data transmission apparatus 700 shown in FIG. 7, and may be configured to perform the foregoing data transmission method. The processor is coupled to a memory, the memory is configured to store a program or instructions, and when the program or the instructions is/are executed by the processor, a chip system is enabled to implement the method in any one of the foregoing method embodiments.

Optionally, there may be one or more processors in the chip system. The processor may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing (digital signal processor, DSP) circuit, a micro controller unit (micro controller unit, MCU), or a programmable controller (programmable logic device, PLD) or another integrated chip.

Embodiments of this application further provide a data transmission system, including a first network device and a second network device. The first network device communicates with the second network device.

The first network device and the second network device are configured to execute a data transmission method.

Optionally, the first network device is a switch, the second network device is a remote access module, the first network device is located at an aggregation layer, the second network device is located at an access layer, and the first network device is configured to manage the second network device.

Optionally, the system further includes a controller. The controller communicates with the second network device.

The controller is configured to manage the first network device and the second network device.

Embodiments of this application further provide a computer-readable storage medium, including instructions or a computer program. When the instructions or the computer program are/is run on a computer, the computer is enabled to perform the data transmission method provided in the foregoing embodiment.

Embodiments of this application further provide a computer program product including instructions or a computer program. When the computer program product runs on a computer, the computer is enabled to perform the data transmission method provided in the foregoing embodiment.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device including a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, unit division is merely logical service division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate parts may or may not be physically separate, and the parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

If the integrated unit is implemented in the form of the software service unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, an optical disc, or the like.

Persons skilled in the art should be aware that, in the foregoing one or more examples, the services described in this application may be implemented by hardware, software, firmware, or any combination thereof. When the services are implemented by the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer

The objectives, technical solutions, and beneficial effects of this application are further described in detail in the foregoing specific implementations. It should be understood that the foregoing descriptions are merely specific implementations of this application.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data transmission method, wherein the method comprises:
receiving, by a first network device, a first packet sent by a second network device, wherein the first packet comprises a media access control address MAC address of a terminal device connected to the second network device and a first management virtual local area network VLAN identifier, the first management VLAN identifier indicates a management VLAN configured for a first port on the second network device, and the terminal device is connected to the second network device through the first port; and
establishing, by the first network device based on the first packet, a first association relationship between the MAC address, the first management VLAN identifier, and a first logical port, wherein the first logical port is located on the first network device and corresponds to the first port.

2. The method according to claim 1, wherein before the receiving, by a first network device, a first packet sent by a second network device, the method further comprises:
configuring, by the first network device, the first management VLAN identifier for the first logical port; and
establishing, by the first network device, a second association relationship between the first management VLAN identifier and the first logical port.

3. The method according to claim 2, wherein the method further comprises:
sending, by the first network device, the first management VLAN identifier to the second network device, to configure a management VLAN identifier corresponding to the first port as the first management VLAN identifier.

4. The method according to any one of claims 1 to 3, wherein the method further comprises:
obtaining, by the first network device, a second packet, wherein a destination MAC address of the second packet is the MAC address of the terminal device;
determining, by the first network device, the first management VLAN identifier based on the destination MAC address and the first association relationship; and
encapsulating, by the first network device, the second packet by using the first management VLAN identifier, to obtain a third packet; and sending the third packet to the second network device.

5. The method according to claim 4, wherein the determining, by the first network device, the first management VLAN identifier based on the destination MAC address and the first association relationship comprises:
determining, by the first network device, the first logical port based on the destination MAC address and the first association relationship; and
determining, by the first network device, the first management VLAN identifier based on the first logical port and the first association relationship.

6. The method according to any one of claims 1 to 5, wherein the method further comprises:
receiving, by the first network device, a fourth packet sent by the second network device, wherein the fourth packet is used by the second network device to register with the first network device, the fourth packet comprises information about each port on the second network device, and the port is configured to connect to the terminal device; and
locally mapping, by the first network device, one logical port to each port.

7. The method according to any one of claims 1 to 6, wherein the method further comprises:
receiving, by the first network device, a fifth packet sent by the second network device, wherein the fifth packet is a broadcast packet, and the fifth packet comprises the first management VLAN identifier;
removing, by the first network device, the first management VLAN identifier from the fifth packet, to obtain a sixth packet;
obtaining, by the first network device based on the first association relationship, a management VLAN identifier other than the first management VLAN identifier;
copying, by the first network device, the sixth packet, and encapsulating, in each sixth packet, a management VLAN identifier other than the first management VLAN identifier, to obtain a seventh packet; and
sending, by the first network device, the seventh packet to the second network device.

8. A data transmission method, wherein the method comprises:
obtaining, by a second network device, a MAC address of a terminal device connected to a first port;
obtaining, by the second network device, a first packet, wherein the first packet comprises the MAC address and a first management VLAN identifier, and the first management VLAN identifier indicates a management VLAN configured for the first port; and
sending, by the second network device, the first packet to a first network device.

9. The method according to claim 8, wherein before the obtaining, by the second network device, a first packet, the method further comprises:
receiving, by the second network device, the first management VLAN identifier sent by the first network device; and
configuring, by the second network device, a management VLAN corresponding to the first port as the management VLAN indicated by the first management VLAN identifier.

10. The method according to claim 8 or 9, wherein the method further comprises:
receiving, by the second network device, a second packet sent by the first network device, wherein the second packet comprises the first management VLAN identifier, and a destination MAC address of the second packet is the MAC address;
determining, by the second network device based on the first management VLAN identifier, that a forwarding port corresponding to the second packet is the first port;
removing, by the second network device, the first management VLAN identifier from the second packet, to obtain a third packet; and
sending, by the second network device, the third packet to the terminal device through the first port.

11. The method according to any one of claims 8 to 10, wherein after the second network device is powered on, the method further comprises:
sending, by the second network device, a fourth packet to the first network device, wherein the fourth packet is used to register with the first network device, the fourth packet comprises information about each port on the second network device, and the port is configured to connect to the terminal device.

12. A data transmission system, wherein the system comprises a first network device and a second network device, and the first network device communicates with the second network device;
the first network device is configured to perform the data transmission method according to any one of claims 1 to 8; and
the second network device is configured to perform the method according to any one of claims 9 to 11.

13. The system according to claim 12, wherein the system further comprises a controller, and the controller communicates with the second network device; and
the controller is configured to manage the first network device and the second network device.

14. A data transmission apparatus, wherein the apparatus comprises:
a receiving unit, configured to receive a first packet sent by a second network device, wherein the first packet comprises a media access control address MAC address of a terminal device connected to the second network device and a first management virtual local area network VLAN identifier, the first management VLAN identifier indicates a management VLAN configured for a first port on the second network device, and the terminal device is connected to the second network device through the first port; and
an establishment unit, configured to establish a first association relationship between the MAC address, the first management VLAN identifier, and a first logical port based on the first packet, wherein the first logical port is located on a first network device and corresponds to the first port.

15. The apparatus according to claim 14, wherein the apparatus further comprises:
a configuration unit, configured to configure the first management VLAN identifier for the first logical port before the first packet sent by the second network device is received, wherein
the establishment unit is further configured to establish a second association relationship between the first management VLAN identifier and the first logical port.

16. The apparatus according to claim 15, wherein the apparatus further comprises:
a sending unit, configured to send the first management VLAN identifier to the second network device, to configure a management VLAN identifier corresponding to the first port as the first management VLAN identifier.

17. The apparatus according to any one of claims 14 to 16, wherein the apparatus further comprises:
an obtaining unit, configured to obtain a second packet, wherein a destination MAC address of the second packet is the MAC address of the terminal device; and
a determining unit, configured to determine the first management VLAN identifier based on the destination MAC address and the first association relationship, wherein
the sending unit is configured to: encapsulate the second packet by using the first management VLAN identifier, to obtain a third packet; and send the third packet to the second network device.

18. The apparatus according to claim 17, wherein the determining unit is specifically configured to: determine the first logical port based on the destination MAC address and the first association relationship, and determine the first management VLAN identifier based on the first logical port and the first association relationship.

19. The apparatus according to any one of claims 14 to 18, wherein the apparatus further comprises a mapping unit, wherein
the receiving unit is further configured to receive a fourth packet sent by the second network device, wherein the fourth packet is used by the second network device to register with the first network device, the fourth packet comprises information about each port on the second network device, and the port is configured to connect to the terminal device; and
the mapping unit is configured to locally map one logical port to each port.

20. The apparatus according to any one of claims 14 to 19, wherein the apparatus further comprises a decapsulating unit, the obtaining unit, a copying unit, an encapsulating unit, and the sending unit, wherein
the receiving unit is further configured to receive a fifth packet sent by the second network device, wherein the fifth packet is a broadcast packet, and the fifth packet comprises the first management VLAN identifier;
the decapsulating unit is configured to remove the first management VLAN identifier from the fifth packet, to obtain a sixth packet;
the obtaining unit is configured to obtain, based on the first association relationship, a management VLAN identifier other than the first management VLAN identifier;
the copying unit is configured to copy the sixth packet;
the encapsulating unit is configured to encapsulate, in each sixth packet, a management VLAN identifier other than the first management VLAN identifier, to obtain a seventh packet; and
the sending unit is configured to send the seventh packet to the second network device.

21. A communication device, wherein the device comprises a processor and a memory, wherein
the memory is configured to store instructions or a computer program; and
the processor is configured to execute the instructions or the computer program in the memory, to enable the communication device to perform the method according to any one of claims 1 to 7, or to perform the method according to any one of claims 8 to 11.
